**Europäisches Patentamt**

**European Patent Office**

**Office européen des brevets**

(19)

(11) Veröffentlichungsnummer : **0 466 863 B1**

(12)

# EUROPÄISCHE PATENTSCHRIFT

(45) Veröffentlichungstag der Patentschrift :
**16.06.93 Patentblatt 93/24**

(51) Int. Cl.⁵ : **B60K 23/08**

(21) Anmeldenummer : **91902942.1**

(22) Anmeldetag : **31.01.91**

(86) Internationale Anmeldenummer :
**PCT/EP91/00180**

(87) Internationale Veröffentlichungsnummer :
**WO 91/12152 22.08.91 Gazette 91/19**

(54) VORRICHTUNG ZUM ZUSCHALTEN EINES ANTRIEBSSTRANGES.

(30) Priorität : **14.02.90 DE 4004448**

(43) Veröffentlichungstag der Anmeldung :
**22.01.92 Patentblatt 92/04**

(45) Bekanntmachung des Hinweises auf die
Patenterteilung :
**16.06.93 Patentblatt 93/24**

(84) Benannte Vertragsstaaten :
**DE FR GB IT**

(56) Entgegenhaltungen :
**DE-A- 3 915 959**
**GB-A- 2 008 694**
**US-A- 4 805 486**
**US-A- 4 895 236**

(73) Patentinhaber : **GKN AUTOMOTIVE
AKTIENGESELLSCHAFT
Alte Lohmarer Strasse 59
W-5200 Siegburg (DE)**

(72) Erfinder : **BOTTERILL, John, Redvers
Weinbergweg 62
W-6600 Saarbrücken (DE)**
Erfinder : **RICKELL, Robert
Pleiser Hecke 21e
W-5200 Siegburg (DE)**
Erfinder : **STALL, Eugen
Höfferhoferstra e 74
W-5206 Neunkirchen (DE)**

(74) Vertreter : **Neumann, Ernst Dieter, Dipl.-Ing.
HARWARDT NEUMANN PATENTANWÄLTE
Scheerengasse 2 Postfach 1455
W-5200 Siegburg (DE)**

EP 0 466 863 B1

## Beschreibung

Die Erfindung betrifft eine Vorrichtung zum Zuschalten eines Antriebsstranges in einem Kraftfahrzeug mit einem Verteilergetriebe für mehrere Antriebssstränge, von denen zumindest ein Antriebsstrang mit einer oder mehreren Antriebsachsen ständig mit einer Antriebseinheit gekoppelt und zumindest ein Antriebsstrang mit einer oder mehreren Antriebsachsen zuschaltbar mit der Antriebseinheit verbindbar ist, mit einer Eingangswelle und einer Ausgangswelle, die über eine Kupplung mit der Eingangswelle verbindbar ist, wobei die Kupplung eine axial betätigbare Reibungskupplung ist.

Vorrichtungen dieser Art dienen dazu, bei einem im Normalfall nur auf der oder den Achsen des ersten Antriebsstrangs angetriebenem Fahrzeug bei unzureichender Traktion auf dieser Achse extern steuerbar die Achse des zweiten Antriebsstranges zuschaltbar ebenfalls anzutreiben. Die Betätigung einer Reibungskupplung kann hierbei hydraulisch, elektro-magnetisch oder elektrisch erfolgen.

In der DE 39 08 478 ist eine Vorrichtung mit elektrischer Betätigung beschrieben, die unter dem Nachteil leidet, einen E-Motor in aufwendiger Sonderkonstruktion mit einer Kugelspindelanordnung zwecks Kraftumsetzung zu haben, wobei die Kugelspindelanordnung innerhalb des Läufers des E-Motors angeordnet ist. Eine Entkoppelung dieser Bauteile würde die axiale Einbaulänge der Vorrichtung vergrößern.

Aus der US 4 895 236 ist eine Vorrichtung mit elektrischer Betätigung bekannt, bei der eine Kugelspindelanordnung vorgesehen ist, deren drehend angetriebener Teil sich zur Kupplungsbetätigung axial verschiebt. Der Drehantrieb erfolgt über einen außerhalb des Gehäuses liegenden E-Motor. Aufgrund der Axialverschiebung in der Drehantriebsverzahnung sind hohe Reibungskräfte zu verzeichnen; die Hysterese der Verstellvorrichtung ist hierdurch nachteilig hoch.

Aufgabe der vorliegenden Erfindung ist es, eine Vorrichtung der vorstehend genannten Art mit einer einfachen kostengünstigen Betätigung, die reibungsarm funktioniert und leicht in elektrische Motor- und Fahrzeugregelungssysteme einbeziehbar ist, bereitzustellen.

Die Lösung hierfür besteht darin, daß zur regelbaren Betätigung der Reibungskupplung zwei gegeneinander um bis zu 180° verdrehbare Ringe in koaxialer Anordnung zu den Kupplungsscheiben vorgesehen sind, von denen einer als drehbar und axial in einem Gehäuse ab,estützter Stützring und der andere als axial auf einer der Wellen verschieblicher Druckring ausgebildet ist, die sich mittels umfangsverlaufender über dem Umfang axial veränderlicher Bahnen an zumindest einem der Ringe gegeneinander abstützen. Der Antrieb und die Steuerung einer derartigen Betätigungseinheit, die von einem geeigneten Elektromotor angetrieben werden kann, der außerhalb oder innerhalb des Gehäuses anbringbar ist, ist völlig unkompliziert und ermöglicht eine fein steuerbare und regelbare Drehmomentverteilung zwischen den beiden Antriebssträngen, insbesondere unter Verzicht auf ein Zwischendifferential. Der Stellmotor kann außen am Gehäuse angeflanscht werden, wobei in günstiger Weiterbildung ein Teil des Gehäuses den Stellmotor schützend umgeben kann, so daß ein besonderer Schlagschutz, bei völliger Einbeziehung in das Gehäuse auch ein Staubschutz und Feuchtigkeitsschutz gegeben ist.

Eine erste Ausführungsform kann hierbei aus einer zylindrischen Kammer am Getriebegehäuse bestehen, in die ein üblicher E-Motor eingesetzt ist.

Nach einer zweiten Ausführungsform wird ein E-Motor in Standardbauweise, jedoch ohne Motorgehäuse unmittelbar in eine zylindrische Kammer am Getriebegehäuse eingesetzt und mit einem Deckel verschlossen.

Die Anordnung des Stellmotors erfolgt dabei jeweils bevorzugt mit zu den Getriebewellen paralleler Drehachse, so daß der Antrieb der Verstellvorrichtung über ein einfaches Stirnraduntersetzungsgetriebe erfolgen kann. Die elektrisch bewirkte Verstellung kommt einer Kombination mit anderen vorstehend genannten elektrischen Steuerungssystemen für die Fahrzeug-Motorleistung und die Radaufhängungs- und Lenkungsbeeinflussung entgegen, für die nach neueren Tendenzen im Fahrzeug eine Vernetzung und ggfs. ein gemeinsamer Datenbus vorgesehen wird. Die Verstellung ist außerordentlich reibungsarm. Die Reibungskräfte im Verstellantrieb können zusätzlich dadurch verringert werden, daß der Stellmotor mit pulsierender Spannung beaufschlagt wird. Bei beaufschlagter im Reibschluß befindlicher Kupplung bleibt in bevorzugter Ausgestaltung der Stellmotor strombeaufschlagt, während zum Freigeben der Kupplung eine Stromumkehr erfolgt.

Hierbei treibt der Stellmotor unmittelbar den auf einer der Wellen drehbar gelagerten Stützring drehend an, der dabei axial ortsfest bleibt, und drückt den ebenfalls auf der Welle gelagerten und gegenüber dem Gehäuse drehfest gehaltenen Druckring bei der Verdrehung axial von sich weg, der über zumindest ein Axiallager und ggfs. über zwischenringe und/oder zapfen die Reibungskupplung betätigt.

Die bei Verdrehung des Stützrings zwischen den beiden Ringen im Sinne einer Axialverschiebung wirksamen Bahnen sind bevorzugt als Kugelrillen mit über dem Umfang veränderlicher Tiefe von zueinander entgegengesetzte Orientierung ausgeführt, zwischen denen - insbesondere in einem Käfigelement gehaltene - Kugeln geführt sind. Zusätzlich zur veränderlichen Tiefe der Kugelrillen kann ein veränderlicher Radius vorgesehen sein, der die Kennung über dem Verdrehwinkel beeinflussen kann.

Nach einer anderen einfache:en Ausgestaltung können auf einem der Ringe Rampen ausgebildet sein, auf denen jeweils ein Nocken an dem anderen der Ringe gleitet. Es können auch Rampen mit dazwischen befindlichen in einem Käfigelement gehaltenen Kegelrollen vorgesehen sein.

In bevorzugter Ausführung ist die Kupplung mit dem Verteilergetriebe des Fahrzeugs in einem gemeinsamen Gehäuse eingebaut. Hierbei liegen die Eingangswelle und eine ständig angetriebene Ausgangswelle zueinander koaxial und sind drehfest miteinander verbunden, wobei insbesondere eine einstückige Ausgestaltung möglich ist, während die kuppelbare Ausgangswelle parallel dazu liegt. Die Kupplung kann koaxial zur Eingangswelle oder zur kuppelbaren Ausgangswelle angeordnet sein, wobei im ersten Fall die Ausgangsseite der Kupplung als gegenüber der Antriebswelle drehbar gelagerte Hülse ausgeführt ist, die im drehfesten Eingriff mit der kuppelbaren Ausgangswelle steht, und im zweiten Fall die Eingangsseite der Kupplung als gegenüber der kuppelbaren Ausgangswelle drehbar gelagerte Hülse ausgeführt sein kann, die in drehfestem Eingriff mit der Eingangswelle ist.

Die Antriebsverbindung von der Eingangswelle zur kuppelbaren Ausgangswelle kann über einen Stirnrädertrieb, insbesondere mit einem Zwischenrad, oder über einen Kettentrieb erfolgen.

Besonders günstig im Hinblick auf eine kompakte Bauweise und geschützte Anordnung eines außenliegenden Stellmotors ist es, wenn die Achse des Stellmotors im wesentlichen in der durch die parallelen Wellen aufgespannten Ebene liegt. Wenn hierbei der Stellmotor und die Kupplung auf gegenüberliegenden Seiten des Stirnrädertriebs bzw. des Kettentriebs liegen, kann eine Übertragungswelle der Verstellvorrichtung durch die Kettenlinie oder durch ein Hohlrad des Stirnrädertriebes hindurchgeführt werden. Stellmotor und Kupplung können jedoch auf der gleichen Seite des Stirnräderantriebs bzw. des Kettentriebs liegen, wodurch sich der Aufbau der Verstellvorrichtung vereinfacht.

Nach einer anderen Ausführung ist die Kupplung im Verlauf des zuschaltbaren Antriebsstrangs hinter einem Verteilergetriebe angeordnet und mit diesem über einen Wellenstran, verbunden. Hierbei kann die Kupplung insbesondere in einem gemeinsamen Gehäuse mit einem Achsantriebs, insbesondere mit einem Differentialgetriebe eingebaut sein.

In einer weiteren Abwandlung kann die Kupplung ebenfalls in zuschaltbarem Abtriebsstrang liegen und über ein eigenes Gehäuse verfügen, wobei Eingangswelle und Ausgangswelle über Wellentriebe mit einem Verteilergetriebe und einem Achsantrieb verbunden sind.

Für die Anordnung des Stellmotors an oder im Getriebegehäuse ergeben sich für die beiden zuletzt genannten Fälle die gleichen Möglichkeiten wie oben bereits im einzelnen beschrieben.

In beiden Ausgestaltungen sind bevorzugt Eingangs- und Ausgangswelle der Kupplung in paralleler Anordnun, ausgeführt. Der Abtriebsstrang vom Verteilergetriebe bis zur Eingangswelle der Kupplung wird dabei ständig angetrieben.

Bevorzugte Ausführungsbeispiele der Erfindung sind in den Zeichnungen dargestellt.

Fig. 1 zeigt eine erfindungsgemäße Vorrichtung im Längsschnitt mit einem Stirnradtrieb zwischen der Eingangswelle und der kuppelbaren Ausgangswelle in einem gemeinsamen Gehäuse mit einem Verteilergetriebe,

Fig. 2 zeigt eine erfindungsgemäße Vorrichtung im Längsschnitt mit einem Kettentrieb zwischen Eingangswelle und kuppelbarer Ausgangswelle in einem gemeinsamen Gehäuse mit einem Verteilergetriebe,

Fig. 3 zeigt eine erfindungsgemäße Vorrichtung im Längsschnitt mit koaxialer Anordnung von Eingangswelle und Ausgangswelle in einem gemeinsamen Gehäuse mit einem Achsgetriebe,

Fig. 4 zeigt eine erfindungsgemäße Vorrichtung im Teillängsschnitt mit einem Kettenantrieb zwischen Eingangswelle und kuppelbarer Ausgangswelle in einem gemeinsamen Gehäuse mit einem Verteilergetriebe,

Fig. 5 zeigt die Anordnung eines Stellmotors ähnlich Fig 4 als Einzelheit in abgewandelter Ausführung,

Fig. 6 zeigt die Anordnung eines Stellmotors ähnlich Fig. 4 als Einzelheit in anderer Ausführung.

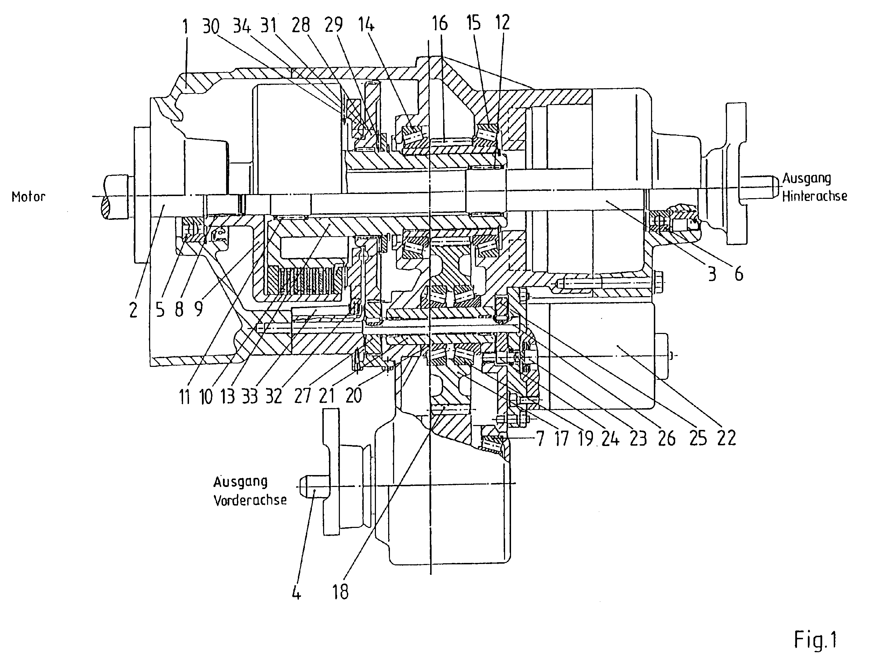

In Fig. 1 ist eine erfindungsgemäße Vorrichtung mit einem mehrteiligen Getriebegehäuse 1 dargestellt, in dem eine vom Fahrzeugmotor über ein Schalt- oder Automatikgetriebe angetriebene Eingangswelle 2, eine einstückig mit dieser ausgeführte erste Ausgangswelle 3 und eine zu diesen parallel liegende zweite Ausgangswelle 4 erkennbar ist. Die Welle 2, 3 ist über zwei Radiallager 5, 6 im Gehäuse 1 abgestützt. Ein Schrägrollenlager 7 dient mit einem weiteren, nicht dargestellten gegenüberliegenden Lager der Lagerung der zweiten Ausgangswelle 4. Auf der Eingangswelle 2 ist über eine Verzahnung 8 ein Kupplungskorb 9 drehfest angeordnet. Dieser trägt die Außenlamellen einer Reibkupplungsanordnung 10. Auf der Welle 2, 3 ist weiterhin in Nadellagern 11, 12 eine Hülse 13 drehbar gelagert, die die Innenlamellen der Kupplungsanordnung 10 hält. Die Hülse 13 ist weiterhin in zwei Schrägrollenlagern 14, 15 im Gehäuse 1 abgestützt, die unmittelbar auf Ansätzen an einem Zahnrad 16 auf der Hülse 13 sitzen. Mit dem Zahnrad 16 ist ein Stirnrad 17 im Eingriff, das seinerseits mit einem Zahnrad 18 auf der Welle 4 kämmt. Das Zahnrad 17 ist in zwei Schrägrollenlagern 19, 20 gelagert, die auf einer ins Gehäuse eingesetzten Hülse 21 laufen. Am Getriebegehäuse ist außen ein elektrischer Stellmotor 22 angeflanscht, dessen Welle 23 ein Antriebsritzel 24 trägt, das mit einem Zahnrad 25 im Eingriff ist, mit dem es ein Untersetzungsgetriebe bildet. Das Zahnrad 25 ist auf einer Welle 26 befestigt, die in der Hülse 21 gelagert ist, diese durchdringt und auf der entgegengesetzten Seite ein weiteres Zahnrad 27 trägt. Das Zahnrad 27 ist im Eingriff mit einem drehbar auf der Hülse 13 gelagerten Stützring 28, die sich über ein Axiallager 29 an der Hülse 13 abstützt. Der Stützring 28 wirkt über in gegenläufigen Kugelrillen variabler Tiefe geführte Kugeln 31 auf einen Druckring 30, der über einen radialen Stift 32, der in eine Axialnut 33 des Gehäuses 1 greift und somit axial verschieblich und drehfest gegenüber dem Gehäuse 1 gehalten ist. Der Druckring 30 wirkt über ein Axiallager 34 auf die Reibkupplungsanordnung 10 zwischen Hülse 13 und Kupplungskorb 9.

Bei unbetätigter Kupplung erfolgt ausschließlich der Durchtrieb von der Eingangswelle 2 zur ersten Ausgangswelle 3 aufgrund der einstückigen Verbindung. Bei Betätigung der Kupplung 10 nimmt die Eingangswelle 2 über den Kupplungskorb 9 die Hülse 13 mit, die über den Rädertrieb 16, 17, 18 die zweite Ausgangswelle 4 dann ebenfalls antreibt.

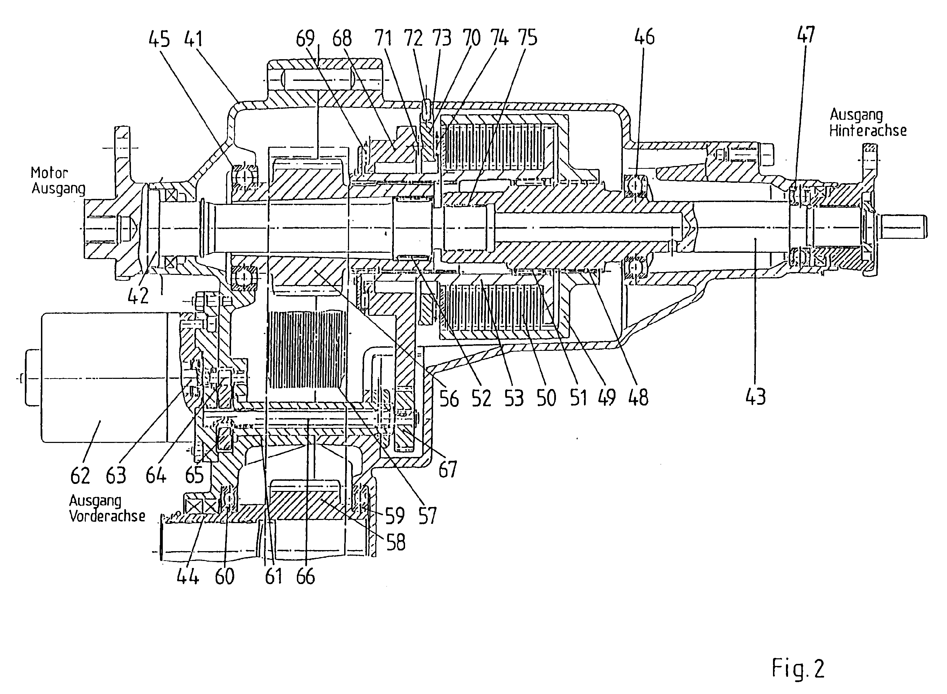

In Fig. 2 ist eine erfindungsgemäße Vorrichtung mit einem Getriebegehäuse 41, einer mit dem Fahrzeugmotor über ein Schalt- oder Automatikgetriebe verbundenen Eingangswelle 42, einer über eine Verzahnung 75 mit dieser verbundenen ersten Ausgangswelle 43 und einer parallel zu dieser angeordneten zweiten Ausgangswelle 44. Die Wellen 42, 43 sind in Radiallagern 46, 47 gelagert. Auf der Ausgangswelle 43 ist über eine Verzahnung 48 ein Kupplungskorb 49 drehfest angeordnet. Dieser trägt die Außenlamellen einer Reibkupplungsanordnung 50. Auf der Welle 42 ist weiterhin in einem Nadellager 52 eine Hülse 53 drehbar gelagert, die die Innenlamellen der Kupplungsanordnung 50 hält. Die Hülse 53 ist weiterhin mit einem Zahnrad 56 drehfest verbunden, das in einem Nadellager 51 auf der Welle 42 und in einem Radiallager 45 gegenüber dem Getriebegehäuse 41 gelagert ist. Mit dem Zahnrad 56 ist eine Kette 57 im Eingriff, die andererseits auf einem Zahnrad 58 auf der Welle 44 läuft. Die Welle 44 ist in zwei Radiallagern 59, 60 gelagert. Am Getriebegehäuse ist außen ein elektrischer Stellmotor 62 angeflanscht, dessen Welle 63 ein Antriebsritzel 64 trägt, das mit einem Zahnrad 65 im Eingriff ist. Das Zahnrad 65 ist auf einer Welle 66 befestigt, die in einer Hülse 61 gelagert ist, diese durchdringt und auf der entgegengesetzten Seite ein weiteres Zahnrad 67 trägt. Das Zahnrad 67 ist im Eingriff mit einem drehbar auf der Hülse 53 gelagerten Stützring 68, der sich über ein Axiallager 69 an der Hülse 53 abstützt. Der Stützring 68 wirkt über in gegenläufigen Kugelrillen variabler Tiefe geführte Kugeln 71 auf einen Druckring 70, an dem eine Axialnut 73 vorgesehen ist, in den ein radialer Stift 72 im Gehäuse 41 greift, und der somit axial verschieblich und drehfest gegenüber dem Gehäuse 41 gehalten ist. Der Druckring 70 wirkt über ein Axiallager 74 auf die Reibkupplungsanordnung 50 zwischen Hülse 53 und Kupplungskorb 49.

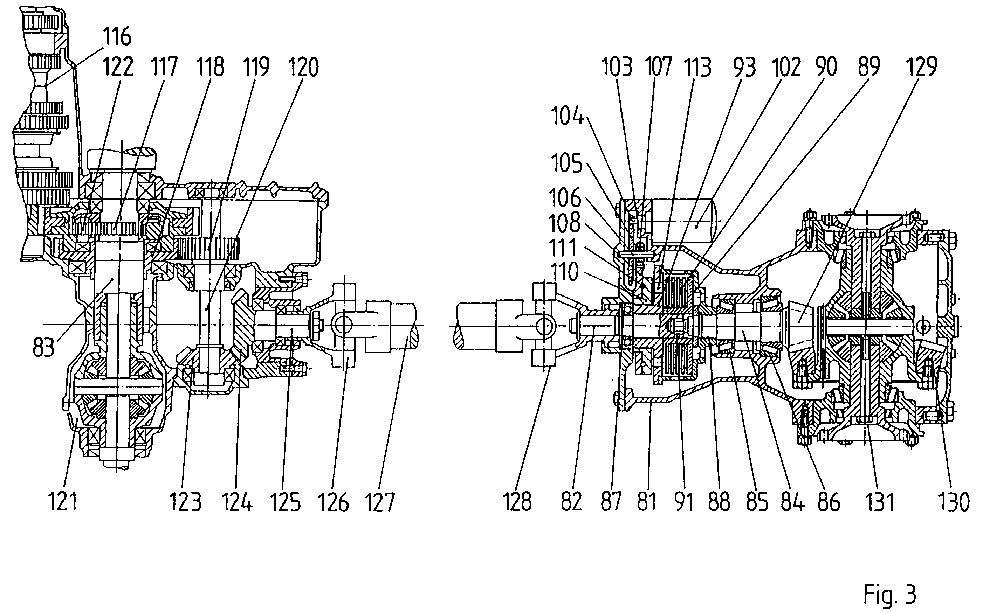

In Fig. 3 ist eine erfindungsgemäße Vorrichtung mit einem Gehäuse 81 gezeigt, das zugleich ein Differentialgetriebe 131 aufnimmt, während das entsprechende Verteilergetriebe davon getrennt in einem gemeinsamen Gehäuse 116 mit einem Schaltgetriebe angeordnet ist, das darüber hinaus ein weiteres Differentialgetriebe 121 aufnimmt. Im Gehäuse 81 ist eine Eingangswelle 82 und eine koaxial zu dieser liegende Ausgangswelle 84 erkennbar. Die Welle 84 ist über zwei Schrägrollenlager 85, 86 im Gehäuse 81 abgestützt. Die Eingangswelle 82 ist über ein Kugellager 87 gegenüber dem Gehäuse und über ein Nadellager 91 auf der Ausgangswelle abgestützt. Auf der Ausgangswelle ist über eine Verzahnung 88 der Kupplungskorb 89 befestigt, der einen ersten Lamellensatz trägt, während eine Innenhülse 93 einen zweiten Lamellensatz trägt, die drehfest mit der Eingangswelle 82 verbunden ist. Die Lamellen werden über Stifte 113 axial beaufschlagt. Zur Verstellung dienen neben im einzelnen nicht dargestellten Zwischenscheiben und Axiallagern ein am Gehäuse abgestützter Stützring 108, der über Kugeln 111 auf einen Druckring 110 einwirkt. Beide Ringe sind auf der Hülse 93 drehbar gelagert. Ein Stellmotor 102, auf dessen Welle 103 ein Ritzel 104 befestigt ist, ist in drehbarer Antriebsverbindung mit einem Zahnrad 105, das auf einer Welle 106 lagert und die zur Übersetzung ein weiteres Zahnrad 107 trägt. Dieses ist mit einer Außenverzahnung des Stützringes 108 im Eingriff, der bei einer Verstellung über die über den Umfang veränderliche Tiefe der Bahnen für die Kugeln 111 in den beiden gezeigten Ringen 108, 110 die Verstellung der Kupplung 90 bewirkt.

Der Antrieb der Eingangswelle 82 erfolgt vom Schaltgetriebe 116 über ein Zwischenrad 122, das auf einer Außenverzahnung 117 der als Hohlwelle ausgeführten Ausgangswelle 83 einwirkt. Diese Hohlwelle treibt unmittelbar ein vorderes Differentialgetriebe 121 an. Ein auf der Hohlwelle befestigtes Zahnrad 118 ist im Eingriff mit einem Zahnrad 119 einer Zwischenwelle 120, auf der ein Kegelrad 123 sitzt; dieses ist mit einem Kegelrad 124 auf einem Wellenzapfen 125 im Eingriff. Auf dem Wellenzapfen 125 ist außerhalb des Gehäuses 116 ein Kreuzgelenk 126 befestigt, das eine Längswelle 127 ständig antreibt. Diese ist über ein wei- teres Kreuzgelenk 128 mit der Eingangswelle 82 des Gehäuses 81 verbunden.

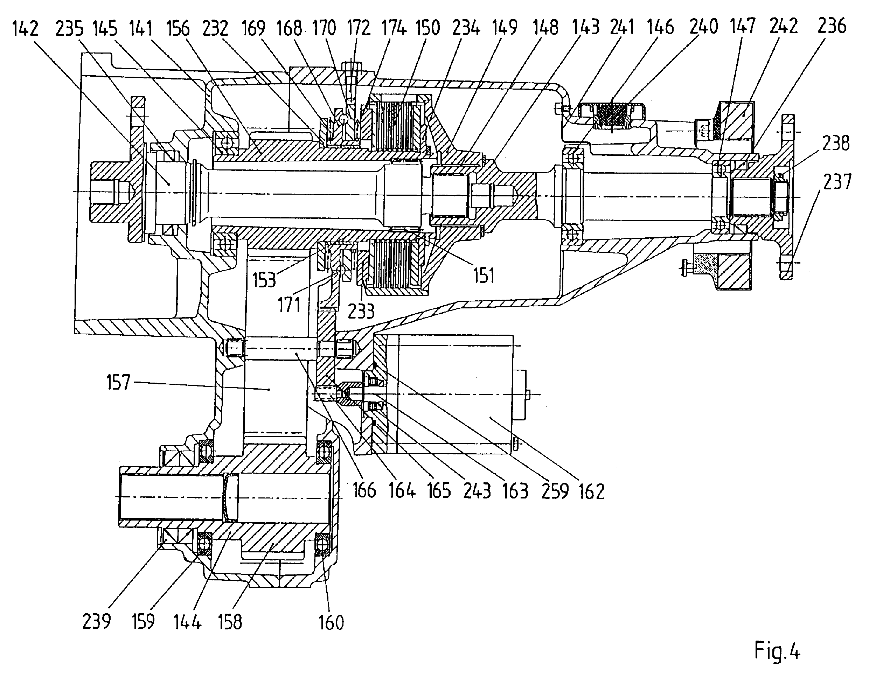

In Fig. 4 ist eine erfindungsgemäße Vorrichtung mit einem mehrteiligen Getriebegehäuse 141 dargestellt, in dem eine vom Fahrzeugmotor über ein Schalt- oder Automatikgetriebe angetriebene Eingangswelle 142, eine drehfest mit dieser verbundene erste Ausgangswelle 143 und eine zu diesen parallel liegende zweite Ausgangswelle 144 erkennbar ist. Die Wellen 142, 143 sind über Radiallager 146, 147 im Gehäuse abgestützt, die zweite Ausgangswelle 144 in Radiallagern 159, 160. Auf der Ausgangswelle 143 ist über eine Verzahnung 148 ein Kupplungskorb 149 drehfest angeordnet. Dieser trägt die Außenlamellen einer Reibungskupplungsanordnung 150. Auf der Welle 142 ist in einem Nadellager 151 und zum anderen gegenüber dem Gehäuse 141 über ein Lager 145 eine Hülse 153 drehbar gelagert, auf der die Innenlamellen der Kupplungsanordnung 150 drehfest angeordnet sind. Die Hülse 153 ist einstückig mit einem Zahnrad 156 verbunden. Mit dem Zahnrad 156 ist eine Kette 157 im Eingriff, die zum anderen auf einem Zahnrad 158 auf der Welle 144 läuft. Die Welle 144 ist in zwei Radiallagern 159, 160 gelagert. Am Getriebegehäuse 141 ist außen ein elektrischer Stellmotor 162 angeflanscht, dessen Welle 163 ein Antriebsritzel 164 trägt, das mit einem Zahnrad 165 im Eingriff ist. Das Zahnrad 165 ist auf einer Welle 166 befestigt, die im Gehäuse 141 gelagert ist. Das Zahnrad 165 ist im Eingriff mit einer drehbar auf der Hülse 153 gelagerten Stützscheibe 168, die sich über ein Axiallager 169 an einer Scheibe 232 abstützt, die mit der Hülse 153 verbunden ist. Der Stützring 168 wirkt über in gegenläufigen Kugelrillen variabler Tiefe geführte Kugeln 171 auf einen Druckring 170, der am Umfang eine Axialnut 173 hat, in den ein Stift 172 im Gehäuse radial eingreift. Der Druckring 170 ist somit axial verschieblich und drehfest gegenüber dem Gehäuse 141 gehalten. Der Druckring 170 wirkt über ein Axiallager 174 und eine Scheibe 233 auf die Reibungskupplungsanordnung 150 zwischen Hülse 153 und Kupplungskorb 149. Die Lamellen der Kupplungsanordnung 155 stützen sich über eine Scheibe 234 axial auf der Hülse 153 ab. Die Welle 142 ist über eine Dichtung 235, die Welle 143 über eine Dichtung 236 gegenüber dem Gehäuse abgedichtet. Auf der Welle 143 ist ein Flansch 237 mittels einer Mutter 238 befestigt. Die Welle 144 ist mittels einer doppelten Dichtung 239 gegenüber dem Gehäuse abgedichtet. Als weitere Einzelheiten sind am Getriebe eine Entlüftungsanordnung 240, unter der ein Schwallblech 241 vorgesehen ist, zu erkennen. Außen am Getriebegehäuse 141 ist eine elastische Aufhängung 242 vorgesehen. Ein vorderes Wellenlager 243 ist an der Welle 163 des Stellmotors 162 erkennbar. Eine weitere Dichtung 259 ist zwischen dem Gehäuse des Stellmotors 162 und dem Getriebegehäuse 141 erkennbar.

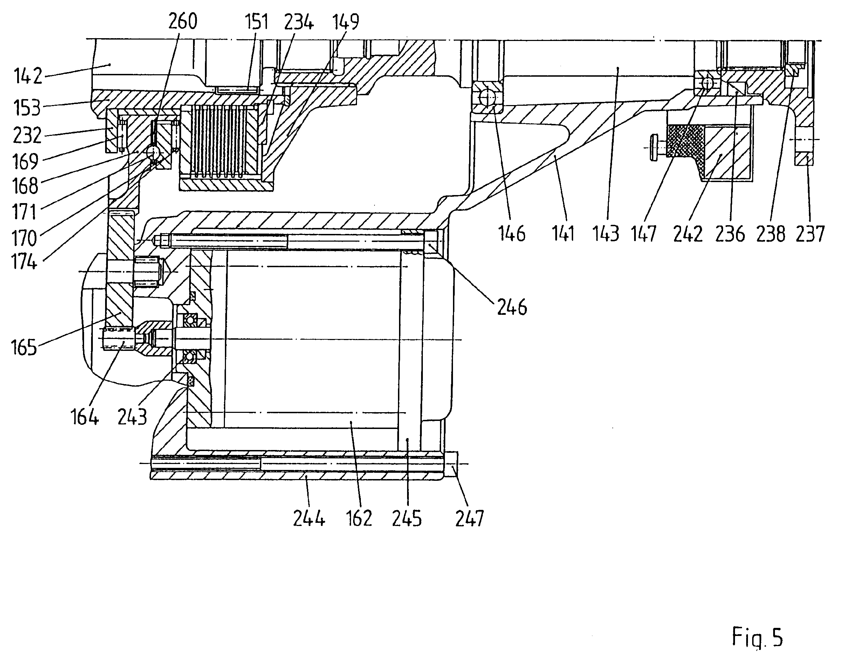

In Fig. 5 sind die gleichen Einzelheiten wie in Fig. 4 mit gleichen Ziffern bezeichnet. Abweichend davon ist an dem Getriebegehäuse 141 ein etwa zylindrischer Ansatz 244 vorgesehen, in den der Deckel 245 des E-Motors 162 paßgenau eingesetzt ist, der mit drei umfangsverteilten Schrauben 246, von denen eine sichtbar ist, im Gehäuse 141 festgeschraubt ist. Weiterhin ist eine Schraube 247 gezeigt, die Teil der Verbindung der beiden Hälften des Gehäuses 141 ist. Ein scheibenförmiger Kugelkäfig 260 zur umfangsverteilten Halterung der Kugeln 171 ist sichtbar.

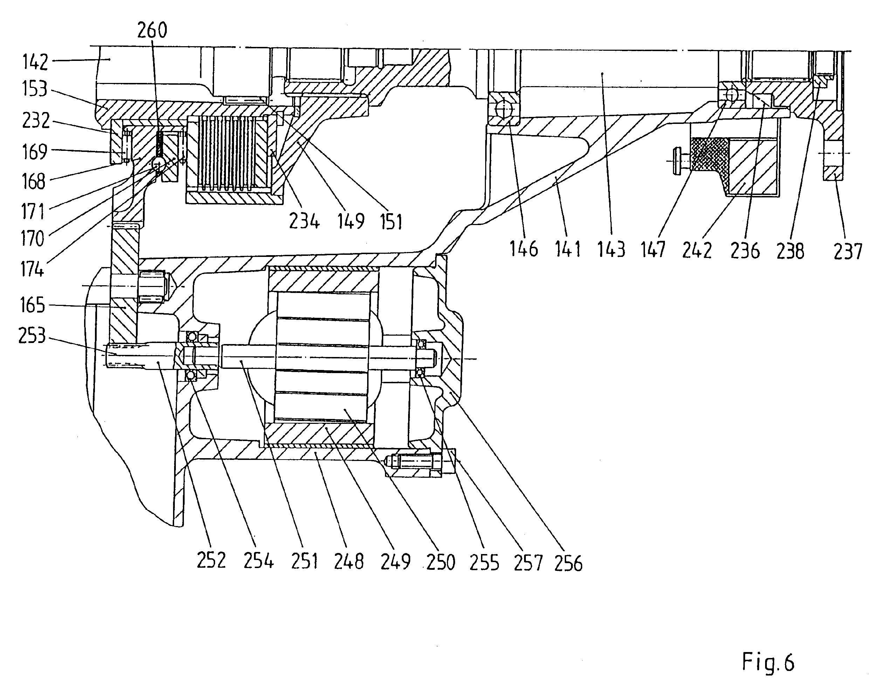

In Fig. 6 sind gleiche Einzelheiten mit gleichen Ziffern wie in Fig. 4 versehen. Abweichend von Fig. 4 und Fig. 5 ist ein etwa zylindrischer Ansatz 248 am Gehäuse 141 vorgesehen, der unmittelbar die Ständerwicklung 249 des E-Motors 162 aufnimmt, von dem weiterhin als Einzelheiten der Läufer 250 erkennbar ist. Die Motorwelle 251 ist hierbei in einen Wellenzapfen 252 eingesetzt, auf dem unmittelbar ein Ritzel 253 ausgebildet ist. Der Zapfen 252 sitzt in einem Lager 254 im Getriebegehäuse 141. Das zweite Wellenende der Welle 251 des E-Motors sitzt in einem Lager 255, das in einem Deckel 256 gehalten ist. Dieser ist mit drei umfangsverteilten Schrauben 257, von denen eine erkennbar ist, am zylindrischen Gehäuseansatz 248 angeschraubt. Ein scheibenförmiger Kugelkäfig 260 zur umfangsverteilten Halterung der Kugeln ist hier ebenfalls dargestellt.

Vorrichtung zum Zuschalten eines Antriebsstranges

Bezugszeichenliste

| 1, 41, 81, 141 | Gehäuse |
| 2, 42, 82, 142 | Eingangswelle |
| 3, 43, 83, 143 | Ausgangswelle |
| 4, 44, 84, 144 | Ausgangswelle |
| 5, 45, 85, 145 | Lager |
| 6, 46, 86, 146 | Lager |
| 7, 47, 87, 147 | Lager |
| 8, 48, 88, 148 | Verzahnung |
| 9, 49, 89, 149 | Kupplungskorb |
| 10, 50, 90, 150 | Reibungskupplung |
| 11, 51, 91, 151 | Nadellager |
| 12, 52 | Nadellager |
| 13, 53, 93, 153 | Hülse |
| 14 | Lager |
| 15 | Lager |
| 155 | Kupplungsanordnung |
| 16, 56, 156 | Zahnrad |
| 17 | Stirnrad |
| 57, 157 | Kette |
| 18, 58, 158 | Zahnrad |
| 19, 59, 159 | Lager |
| 20, 60, 160 | Lager |
| 21, 61 | Hülse |
| 22, 62, 102, 162 | Stellmotor |
| 23, 63, 103, 163 | Welle |
| 24, 64, 104, 164 | Ritzel |
| 25, 65, 105, 165 | Zahnrad |
| 26, 66, 106, 166 | Welle |

| | | | | |
|---|---|---|---|---|
| 27, | 67, | 107 | | Zahnrad |
| 28, | 68, | 108, | 168 | Stützring |
| 29, | 69, | | 169 | Axiallager |
| 30, | 70, | 110, | 170 | Druckring |
| 31, | 71, | 111, | 171 | Kugel |
| 32, | 72 | | | Stift |
| | | | 172 | Zapfen |
| 33, | 73, | 113, | 173 | Axialnut |
| 34, | 74, | | 174 | Axiallager |
| | 75 | | | Verzahnung |
| | | 116 | | Schaltgetriebe |
| | | 117 | | Verzahnung |
| | | 118 | | Zahnrad |
| | | 119 | | Zahnrad |
| | | 120 | | Zwischenwelle |
| | | 121 | | Differentialgetriebe |
| | | 122 | | Zwischenrad |
| | | 123 | | Kegelrad |
| | | 124 | | Tellerrad |
| | | 125 | | Wellenzapfen |
| | | 126 | | Kreuzgelenk |
| | | 127 | | Gelenkwelle |
| | | 128 | | Kreuzgelenk |
| | | 129 | | Kegelrad |
| | | 130 | | Tellerrad |
| | | 131 | | Differentialgetriebe |
| | | | 232 | Scheibe |
| | | | 233 | Scheibe |
| | | | 234 | Scheibe |
| | | | 235 | Dichtung |
| | | | 236 | Dichtung |
| | | | 237 | Flansch |
| | | | 238 | Mutter |
| | | | 239 | Dichtung |
| | | | 240 | Dichtung |

| 241 | Lager |
| 242 | Aufhängung |
| 243 | Lager |
| 244 | Zylinderansatz |
| 245 | Deckel |
| 246 | Schraube |
| 247 | Schraube |
| 248 | Zylinderansatz |
| 249 | Ständerwicklung |
| 250 | Läufer |
| 251 | Motorwelle |
| 252 | Zapfen |
| 253 | Ritzel |
| 254 | Lager |
| 255 | Wellenzapfen |
| 256 | Deckel |
| 257 | Schraube |
| 258 | Gehäuseansatz |
| 259 | Dichtung |
| 260 | Kugelkäfig |

**Patentansprüche**

1. Vorrichtung zum Zuschalten eines Antriebsstranges in einem Kraftfahrzeug mit einem Verteilergetriebe für mehrere Antriebsstränge, von denen zumindest .ein Antriebsstrang ständig mit einer Antriebseinheit gekoppelt und zumindest ein Antriebsstrang zuschaltbar mit der Antriebseinheit verbindbar ist, mit einer Eingangswelle (2, 42, 82, 142), und einer Ausgangswelle (4, 44, 84, 144), die über eine Kupplung mit der Eingangswelle (2, 42, 82, 142) verbindbar ist, wobei die Kupplung eine axial betätigbare Reibungskupplung (10, 50, 90, 150) ist,
dadurch gekennzeichnet,
daß zur regelbaren Betätigung der Reibungskupplung (10, 50, 90, 150) zwei gegeneinander um bis zu 180° verdrehbare Ringe (28, 30; 68, 70; 108, 110; 168, 170) in koaxialer Anordnung zu den Kupplungsscheiben vorgesehen sind, von denen einer drehbar und als axial in einem Gehäuse (1, 41, 81, 181) abgestützter Stützring (28, 68, 108, 168) und der andere als axial auf einer der Wellen verschieblicher Druckring (30, 70, 110, 170) ausgebildet ist, die sich mittels umfangsverlaufender über dem Umfang veränderlicher Bahnen an zumindest einem der Ringe gegeneinander abstützen.

2. Vorrichtung nach Anspruch 1,
dadurch gekennzeichnet,
daß die Bahnen als Kugelrillen ausgeführt sind und darin insbesondere in einem Käfigelement (260) gehaltene Kugeln (31; 71, 111, 171) geführt sind.

3. Vorrichtung nach Anspruch 1 oder 2,
dadurch gekennzeichnet,

daß zueinander gegenläufige Bahnen in den Ringen (28, 30; 68, 70; 108, 110; 168, 170) einander paarweise zugeordnet sind.

4. Vorrichtung nach einem der Ansprüche 1 bis 3,
dadurch gekennzeichnet,
daß die Bahnen über den Umfang veränderlichen Radius haben.

5. Vorrichtung nach Anspruch 1,
dadurch gekennzeichnet,
daß die Bahnen als Rampen ausgeführt sind und dazwischen insbesondere in einem Käfigelement (260) gehaltene Kegelrollen geführt sind.

6. Vorrichtung nach Anspruch 1,
dadurch gekennzeichnet,
daß die Bahnen an einem Ring als Rampen und an dem anderen Ring als Kontaktnocken ausgeführt sind.

7. Vorrichtung nach einem der Ansprüche 1 bis 6,
dadurch gekennzeichnet,
daß ein drehend antreibender Stellmotor (22, 62, 102, 162) zur Betätigung der Kupplung (10, 50, 90, 150) vorgesehen ist.

8. Vorrichtung nach einem der Ansprüche 1 bis 7,
dadurch gekennzeichnet,
daß der Stellmotor (22, 62, 102, 162) von einem Teil des Gehäuses (1, 41, 81, 141) umschlossen ist.

9. Vorrichtung nach Anspruch 8,
dadurch gekennzeichnet,
daß der Stellmotor (22, 62, 102, 162) ein E-Motor ist, dessen Gehäuse in einem etwa zylindrischen Ansatz (244, 248) des Gehäuses (1, 41, 81, 141) eingesetzt ist.

10. Vorrichtung nach Anspruch 8,
dadurch gekennzeichnet,
daß der Stellmotor (22, 62, 102, 162) ein E-Motor ist, dessen Gehäuse unmittelbar von einer zylindrischen Ansatz (248) des Gehäuses (1, 41, 81, 141) und einem abschließenden Deckel (256) gebildet wird.

11. Vorrichtung nach einem der Ansprüche 1 bis 10,
dadurch gekennzeichnet,
daß der Stellmotor (22, 62, 102, 162) eine in der durch die Getriebewellen (2, 3, 4; 42, 43, 44, 82, 83, 84; 142, 143, 144) aufgespannte Ebene liegende Welle (23, 63, 103, 163, 251) in achsparalleler Anordnung umfaßt.

12. Vorrichtung nach einem der Ansprüche 1 bis 11,
dadurch gekennzeichnet,
daß der Stützring (28, 68, 108, 168) mit einer Außenverzahnung versehen und begrenzt gegenüber dem Gehäuse (1, 41, 81, 141) verdrehbar ist und der Druckring (30, 70, 110, 168) mit einem Eingriffsmittel (32, 33; 72, 73) gegenüber dem Gehäuse (1, 41) versehen und unverdrehbar gegenüber diesem axial verschiebbar geführt ist.

13. Vorrichtung nach einem der Ansprüche 1 bis 12,
dadurch gekennzeichnet,
daß die Kupplung (10, 50, 150) in einem gemeinsamen Gehäuse (1, 41, 141) mit dem Verteilergetriebe angeordnet ist (Fig. 1, 2).

14. Vorrichtung nach einem der Ansprüche 1 bis 13,
dadurch gekennzeichnet,
daß die Kupplung (90) in einem Achsgehäuse (81), insbesondere mit einem Differentialgetriebe (131) eines der zuschaltbaren Antriebsstränge angeordnet ist (Fig. 3).

15. Vorrichtung nach einem der Ansprüche 1 bis 14,
dadurch gekennzeichnet,

9

daß die Kupplung (10, 50, 90, 150) koaxial zur Eingangswelle (2, 42, 82, 142) angeordnet ist und die Ausgangsseite der Kupplung (10, 50, 90, 150) als auf der Eingangswelle drehbar gelagerte Hülse (13, 53, 93, 153) ausgeführt ist, die in drehfestem Eingriff mit der Ausgangswelle (4, 44, 84, 144) steht.

16. Vorrichtung nach einem der Ansprüche 1 bis 14,
dadurch gekennzeichnet,
daß die Kupplung (10, 50, 90, 150) koaxial zur Ausgangswelle (4, 44, 84, 144) angeordnet ist und die Eingangsseite der Kupplung (10, 50, 90, 150) als auf der Ausgangswelle drehbar gelagerte Hülse ausgeführt ist, die in drehfestem Eingriff mit der Eingangswelle (2, 42, 142, 144) ist.

17. Vorrichtung nach einem der Ansprüche 1 bis 16,
dadurch gekennzeichnet,
daß die weitere Ausgangswelle (3, 43, 83, 143) für den ständig angetriebenen Antriebsstrang mit der Eingangswelle (2, 42, 82, 142) drehfest verbunden, insbesondere einstückig ist.

18. Vorrichtung nach Anspruch 17,
dadurch gekennzeichnet,
daß eine der Ausgangswellen (3, 43, 83, 143) mit der Eingangswelle (2, 42, 82, 142) koaxial und die andere der Ausgangswellen (4, 44, 84, 144) parallel zu diesen ist.

19. Vorrichtung nach einem der Ansprüche 17 bis 18,
dadurch gekennzeichnet,
daß der drehfeste Antrieb von der Eingangswelle (2, 42, 82, 142) zur parallelen Ausgangswelle (4, 44, 84, 144) über einen Stirnrädertrieb (16, 17, 18), insbesondere mit einem Zwischenrad, erfolgt.

20. Vorrichtung nach einem der Ansprüche 17 bis 19,
dadurch gekennzeichnet,
daß der drehfeste Antrieb von der Eingangswelle (2, 42, 82, 142) zur parallelen Ausgangswelle (4, 44, 84, 144) über einen Kettentrieb (56, 57, 58; 156, 157, 158) erfolgt.

21. Vorrichtung nach den Ansprüchen 19 und 20,
dadurch gekennzeichnet,
daß ein Übersetzungsgetriebe vom Stellmotor (22, 62, 102, 162) zum Stützring (28, 68, 108, 168) eine durch ein Hohlrad (17) des Stirnrädertriebs (16, 17, 18) geführte Welle umfaßt.

22. Vorrichtung nach Anspruch 20,
dadurch gekennzeichnet,
daß ein Übersetzungsgetriebe vom Stellmotor (22, 62, 102, 162) zum Stützring (28, 68, 108, 168) eine durch die Kettenlinie des Kettentriebs (56, 57, 58) geführte Welle (66) umfaßt.

## Claims

1. A device for connecting a driveline in a motor vehicle having a transfer box for a plurality of drivelines with at least one driveline being permanently connected to a drive unit and at least one being designed so as to be connectable to the drive unit, having an input shaft (2, 42, 82, 142) and an output shaft (4, 44, 84, 144) which, via a coupling, is connectable to the input shaft (2, 42, 82, 142), with the coupling being an axially operable friction coupling (10, 50, 90, 150),
characterised in
that, for the purpose of controllably operating the friction coupling (10, 50, 90, 150), there are provided two rings (28, 30; 68, 70; 108, 110; 168, 170) which are rotatable relative to one another by up to 180°, which are arranged coaxially relative to the coupling plates, one of which rings is designed in the form of a rotatable supporting ring (28, 68, 108, 168) which is axially supported on a housing (1, 41, 81, 181) and the other one in the form of a pressure ring (30, 70, 110, 170) which is axially movable on one of the shafts, said rings supporting one another via circumferentially extending and circumferentially varying tracks provided on at least one of the rings.

2. A device according to claim 1,
characterised in

EP 0 466 863 B1

that the tracks are designed as ball grooves, with balls (31; 71, 111, 171) especially held in a cage element (260) being guided therein.

3. A device according to claim 1 or 2,
characterised in
that tracks provided in the rings (28, 30; 68, 70; 108, 110; 168, 170) and extending in opposite directions relative to one another are associated with one another in pairs.

4. A device according to any one of claims 1 to 3,
characterised in
that the tracks comprise circumferentially varying radii.

5. A device according to claim 1,
characterised in
that the tracks are designed in the form of ramps and that in the region therebetween there are guided tapered rollers especially held in a cage element (260).

6. A device according to claim 1,
characterised in
that on one ring the tracks are designed in the form of ramps and on the other ring in the form of contact cams.

7. A device according to any one of claims 1 to 6,
characterised in
that there is provided a rotatably driving adjusting motor (22, 62, 102) for operating the coupling (10, 50, 90, 150).

8. A device according to any one of claims 1 to 7,
characterised in
that the adjusting motor (22, 62, 102, 162) is enclosed by part of the housing (1, 41, 81, 141).

9. A device according to claim 8,
characterised in
that the adjusting motor (22, 62, 102, 162) is an electric motor whose housing is inserted into an approximately cylindrical attachment (244, 248) of the housing (1, 41, 81, 141).

10. A dvice according to claim 8,
characterised in
that the adjusting motor (22, 62, 102, 162) is an electric motor whose housing is formed directly by a cylindrical attachment (148) of the housing (1, 41, 81, 141) and a sealing cover (256).

11. A device according to any one of claims 1 to 10,
characterised in
that the adjusting motor (22, 62, 102, 162) comprises a shaft (23, 63, 103, 163, 251) which is positioned in the plane formed by the gearbox shafts (2, 3, 4; 42, 43, 44; 82, 83, 84; 142, 143, 144) and arranged so as to be axis-parallel.

12. A device according to any one of claims 1 to 11,
characterised in
that the supporting ring (28, 68, 108, 168) is provided with outer teeth and, to a limited extent, rotatable relative to the housing (1, 41, 81, 141) and that the pressure ring (30, 70, 110, 168) is provided with engaging means (32, 33; 72, 73) relative to the housing (1, 41) and non-rotatably and axially movably guided relative thereto.

13. A device according to any one of claims 1 to 12,
characterised in
that the coupling (10, 50, 150) and the transfer box are arranged in a common housing (1, 41, 141) (Figures 1 and 2).

14. A device according to any one of claims 1 to 13,

11

characterised in
that the coupling (90) is arranged in an axle housing (81), especially together with a differential gear (131) of one of the connectable drivelines (Fig. 3).

15. A device according to any one of claims 1 to 14,
characterised in
that the coupling (10, 50, 90, 150) is arranged coaxially relative to the input shaft (2, 42, 82, 142) and that the output end of the coupling (10, 50, 90, 150) is designed as a sleeve (13, 53, 93) which is rotatably supported on the input shaft and which non-rotatingly engages the output shaft (4, 44, 84, 144).

16. A device according to any one of claims 1 to 14,
characterised in
that the coupling (10, 50, 90, 150) is arranged coaxially relative to the output shaft (4, 44, 84, 144) and that the input end of the coupling (10, 50, 90, 150) is designed as a sleeve which is rotatably supported on the output shaft and which non-rotatingly engages the input shaft (2, 42, 142, 144).

17. A device according to any one of claims 1 to 16,
characterised in
that the further output shaft (3, 43, 83, 143) for the permanently driven driveline is non-rotatingly connected to, especially integral with, the input shaft (2, 42, 82, 142).

18. A device according to claim 17,
characterised in
that one of the output shafts (3, 43, 83, 143) is arranged so as to be coaxial relative to the input shaft (2, 42, 82, 142), the other one of the output shafts (4, 44, 84, 144) being arranged so as to be parallel thereto.

19. A device according to any one of claims 17 to 18,
characterised in
that the permanently engaged drive from the input shaft (2, 42, 82, 142) to the parallel output shaft (4, 44, 84, 144) is effected via a spur gear drive (16, 17, 18), especially having an intermediate gear.

20. A device according to any one of claims 17 to 19,
characterised in
that the permanently engaged drive from the input shaft (2, 42, 82, 142) to the parallel output shaft (4, 44, 84, 144) is effected via a chain drive (56, 57, 58; 156, 157, 158).

21. A device according to claims 19 and 20,
characterised in
that a transmission gear from the adjusting motor (22, 62, 102, 162) to the supporting ring (28, 68, 108, 168) comprises a shaft guided through a hollow gear (17) of the spur gear drive (16, 17, 18).

22. A device according to claim 20,
characterised in
that a transmission gear from the adjusting motor (22, 62, 102, 162) to the supporting ring (28, 68, 108, 168) comprises a shaft (66) guided through the chain line of the chain drive (56, 57, 58).

## Revendications

1. Dispositif pour embrayer une chaîne cinématique dans un véhicule automobile comprenant une botte de transfert qui commande plusieurs chaînes cinématiques, parmi lesquelles au moins une chaîne cinématique est accouplée en permanence à une unité motrice et au moins une chaîne cinématique peut être accouplée à l'unité motrice par embrayage, ce dispositif comprenant un arbre d'entrée (2, 42, 82, 142) et un arbre de sortie (4, 44, 84, 144), lequel peut être accouplé à l'arbre d'entrée (2, 42, 82, 142) au moyen d'un embrayage, l'embrayage étant un embrayage à friction (10, 50, 90, 150) commandé par déplacement axial,
caractérisé en ce que pour l'actionnement réglable de l'embrayage à friction (10, 50, 90, 150), il est prévu deux bagues (28, 30 ; 68, 70 ; 108, 110 ; 168, 170) pouvant tourner l'une par rapport à l'autre d'un angle allant jusqu'à 180°, disposées dans une disposition coaxiale aux disques d'embrayage, dont l'une est

EP 0 466 863 B1

constituée par une bague d'appui (28, 68, 108, 168) qui prend appui avec possibilité de rotation et en butée axiale dans un carter (1, 41, 81, 181) tandis que l'autre est constituée par une bague de pression (30, 70, 110, 170) qui peut coulisser axialement sur l'un des arbres, ces bagues s'appuyant l'une contre l'autre par l'intermédiaire de pistes circonférentielles, prévues sur au moins des bagues, qui varient sur la circonférence.

2.  Dispositif selon la revendication 1,
    **caractérisé**
    en ce que les pistes sont constituées par des rainures de roulement a billes et que les billes (31 ; 71, 111, 171) sont guidées dans ces rainures, notamment en étant maintenues dans une cage (260).

3.  Dispositif selon la revendication 1 ou 2,
    **caractérisé**
    en ce que deux pistes mutuellement opposées sont prévues dans les bagues (28, 30 ; 68, 70 ; 108, 110 ; 168, 170) en formant une paire.

4.  Dispositif selon une des revendications 1 à 3,
    **caractérisé**
    en ce que les pistes ont un rayon qui varie sur la circonférence.

5.  Dispositif selon la revendication 1,
    **caractérisé**
    en ce que les pistes sont constituées par de rampes et des rouleaux coniques sont guidés entre ces pistes, notamment en étant maintenus dans une cage (260).

6.  Dispositif selon la revendication 1,
    **caractérisé**
    en ce que les pistes sont constituées par des rampes sur une bague et par des bossages de contact sur l'autre bague.

7.  Dispositif selon une des revendications 1 à 6,
    **caractérisé**
    en ce qu'il est prévu un servomoteur (22, 62, 102, 162) entraînant en mouvement rotatif pour l'actionnement de l'embrayage (10, 50, 90, 150).

8.  Dispositif selon une des revendications 1 à 7,
    **caractérisé**
    en ce que le servomoteur (22, 62, 102, 162) est entouré par une partie du carter (1, 41, 81, 141).

9.  Dispositif selon la revendication 8,
    **caractérisé**
    en ce que le servomoteur (22, 62, 102, 162) est un moteur électrique dont le carter est encastré dans un prolongement à peu près cylindrique (244, 248) du carter (1, 41, 81, 141).

10. Dispositif selon la revendication 8,
    **caractérisé**
    en ce que le servomoteur (22, 62, 102, 162) est un moteur électrique dont le carter est directement formé par un prolongement cylindrique (248) qui ferme ce carter.

11. Dispositif selon une des revendications 1à 10,
    **caractérisé**
    en ce que le servomoteur (22, 62, 102, 162) comprend un arbre (23, 63, 163, 251) contenu dans un plan qui passe par les arbres (2, 3, 4 ; 42, 43, 44, 82, 83, 84 ; 142, 143, 144) de la botte, dans une disposition où leurs axes sont parallèles.

12. Dispositif selon une des revendications 1 à 11,
    **caractérisé**
    en ce que la bague d'appui (28, 68, 108, 168) est munie d'une denture extérieure et peut tourner d'un angle limité par rapport au carter (1, 41, 81, 141), et la bague de pression (30, 72, 110, 168) est munie de moyens de prise (32, 33 ; 72, 73) avec le carter (1, 41) et est guidée mobile en translation axiale mais bloquée solidairement en rotation par rapport à ce carter.

13. Dispositif selon une des revendications 1 à 12,
caractérisé
en ce que l'embrayage (10, 50, 150) est disposé dans un carter commun (1, 41, 141) qu'il partage avec la boîte de transfert (figures 1, 2).

14. Dispositif selon une des revendications 1 à 13,
caractérisé
en ce que l'embrayage (90) est agencé dans un carter d'essieu (81) en particulier avec un différentiel (131) appartenant à l'une des chaînes cinématiques embrayables (figure 3).

15. Dispositif selon une des revendications 1 à 14,
caractérisé
en ce que l'embrayage (10, 50, 90, 150) est disposé coaxialement à l'arbre d'entrée (2, 42, 82, 142) et le côté de sortie de l'embrayage (10, 50, 90, 150) est constitué par une douille (13, 53, 93, 153) montée rotative sur l'arbre d'entrée, et qui est en prise solidairement en rotation avec l'arbre de sortie (4, 44, 84, 144).

16. Dispositif selon une des revendications 1 à 14,
caractérisé
en ce que l'embrayage (10, 50, 90, 150) est agencé coaxialement à l'arbre de sortie (4, 44, 84, 144) et le côté d'entrée de l'embrayage (10, 50, 90, 150) est constitué par une douille montée mobile en rotation sur l'arbre de sortie et qui est en prise solidairement en rotation avec l'arbre d'entrée (2, 42, 142, 144).

17. Dispositif selon une des revendications 1 à 16,
caractérisé
en ce que l'autre arbre de sortie (3, 43, 83, 143) entraînant la chaîne cinématique entraînée en permanence est relié solidairement en rotation à l'arbre d'entrée (2, 42, 82, 142) et est en particulier d'une seule pièce avec cet arbre.

18. Dispositif selon la revendication 17,
caractérisé
en ce qu'un des arbres de sortie (3, 43, 83, 143) est coaxial à l'arbre d'entrée (2, 42, 82, 142) et l'autre des arbres de sortie (4, 44, 84, 144) est parallèle à celui-ci.

19. Dispositif selon une des revendications 17 à 18,
caractérisé
en ce que l'entraînement solidaire en rotation allant de l'arbre d'entrée (2, 42, 82, 142) à l'arbre de sortie parallèle (4, 44, 84,, 144) s'effectue par l'intermédiaire d'une transmission à roues droites (16, 17, 18), en particulier avec une roue intermédiaire.

20. Dispositif selon une des revendications 17 à 19,
caractérisé
en ce que l'entraînement solidaire en rotation allant de l'arbre d'entrée (2, 42, 82, 142) à l'arbre de sortie parallèle (4, 44, 84, 144) s'effectue par l'intermédiaire d'une transmission à chaîne (56, 57, 58 ; 156, 157, 158).

21. Dispositif selon les revendications 19 et 20,
caractérisé
en ce qu'une transmission reliant le servomoteur (22, 62, 102, 162) à la bague d'appui (28, 68, 108, 168) comprend un arbre qui est enfilé à travers une roue creuse (17) de la transmission à roues droites (16, 17, 18).

22. Dispositif selon la revendication 20,
caractérisé
en ce qu'une transmission reliant le servomoteur (22, 62, 102, 162) à la bague d'appui (28, 68, 108, 168) comprend un arbre (66) qui traverse la ligne de chaîne de la transmission à chaîne (56, 57, 58).

Fig.1

Motor Ausgang

Ausgang Hinterachse

Ausgang Vorderachse

Fig.2

EP 0 466 863 B1

Fig. 3

Fig. 4

Fig. 5

Fig.6